Europäisches Patentamt

European Patent Office

Office européen des brevets

(11) Veröffentlichungsnummer: **0 183 009**
**A2**

(12) **EUROPÄISCHE PATENTANMELDUNG**

(21) Anmeldenummer: **85112369.5**

(22) Anmeldetag: **30.09.85**

(51) Int. Cl.⁴: **A 47 J 39/00**

(30) Priorität: **29.11.84 DE 3443477**

(43) Veröffentlichungstag der Anmeldung:
**04.06.86 Patentblatt 86/23**

(84) Benannte Vertragsstaaten:
**AT BE CH DE FR GB IT LI NL SE**

(71) Anmelder: **Buderus Aktiengesellschaft**
**Sophienstrasse 32-34**
**D-6330 Wetzlar(DE)**

(72) Erfinder: **Durth, Wilfried**
**Freier-Grund-Strasse 24**
**D-5909 Burbach-Wahlbach(DE)**

(74) Vertreter: **Benner, Alwin, Dipl.-Ing.**
**Buderus Aktiengesellschaft ZA-Patentabteilung Postfach**
**1220**
**D-6330 Wetzlar(DE)**

(54) **Verfahren und Vorrichtung zum wahlweisen Betreiben eines Gargerätes mit umgewälzter Heissluft oder Wasserdampf.**

(57) Die Umstellung eines zunächst mit Heißluft von etwa 250°C betriebenen Gargerätes auf Dämpfbetrieb wird dadurch in kurzer Zeit und gefahrlos ermöglicht, indem die Garraumtemperatur durch Aufsprühen von Wasser auf eine Garraumwand vor dem Dämpfbetrieb auf etwa 100°C gesenkt wird.

FIG.2

EP 0 183 009 A2

BUDERUS AKTIENGESELLSCHAFT
TP/Be/St/PG 1149

Verfahren und Vorrichtung zum wahlweisen Betreiben
eines Gargerätes mit umgewälzter Heißluft oder
Wasserdampf

Die Erfindung betrifft ein Verfahren und eine Vorrichtung zum wahlweisen Betreiben eines Gargerätes mit umgewälzter Heißluft oder Wasserdampf.

Es ist bekannt den Garungsprozess in einem Garraum dadurch zu beschleunigen und zu vergleichmäßigen, indem die heiße Luft im Garraum mittels eines Gebläses umgewälzt und dabei durch entsprechende Führung möglichst gleichmäßig an den zu garenden Speisen vorbei geführt wird. Anstelle der heißen Luft kann auch ein solches Gerät mit Wasserdampf betrieben werden. Der Dämpfbetrieb ist aber nur bis 100 $^{o}$C möglich. Wenn man ein zunächst bis 250 $^{o}$C mit Heißluft betriebenes Gerät auf Dämpfbetrieb umschalten will, ist es notwendig die Temperatur auf 100 $^{o}$C abfallen zu lassen, weil es sonst zu einer großen Verdampfung und damit zu einem Überdruck kommen kann.

Die natürliche Abkühlung des Garraumes auf die erforderliche Temperatur von 100 $^{\circ}$C für das Dämpfen dauert aber verhältnismäßig lange, was für die Qualität des Gargutes abträglich ist. Man könnte durch Öffnen der Beschickungstür etwas nachhelfen, aber dann geht Wärmeenergie ungenutzt verloren.

Der Erfindung liegt die Aufgabe zugrunde, die Umstellung von Heißluft- auf Dämpfbetrieb ohne Energieverluste auf schnellste Weise automatisch zu ermöglichen.

Zur Lösung dieser Aufgabe werden die im Patentanspruch angegebenen Merkmale vorgeschlagen.

Durch die großflächige Beaufschlagung einer Garraumwand mit kaltem Wasser, ergibt sich eine große Wärmetauscherfläche. Die bei der Verdampfung des kalten Wassers dem Garraum entzogene Wärme sorgt dafür, daß die Garraumtemperatur innerhalb kurzer Zeit auf die erforderlichen 100 $^{\circ}$C sinkt. Die zum Verdampfen verbrauchte Energie ist aber nicht nutzlos dem Prozess entzogen, sondern der entstandene Wasserdampf wird für den anschließenden Dämpfbetrieb genutzt.

In der Zeichnung ist ein Ausführungsbeispiel der Erfindung dargestellt.

Es zeigen:

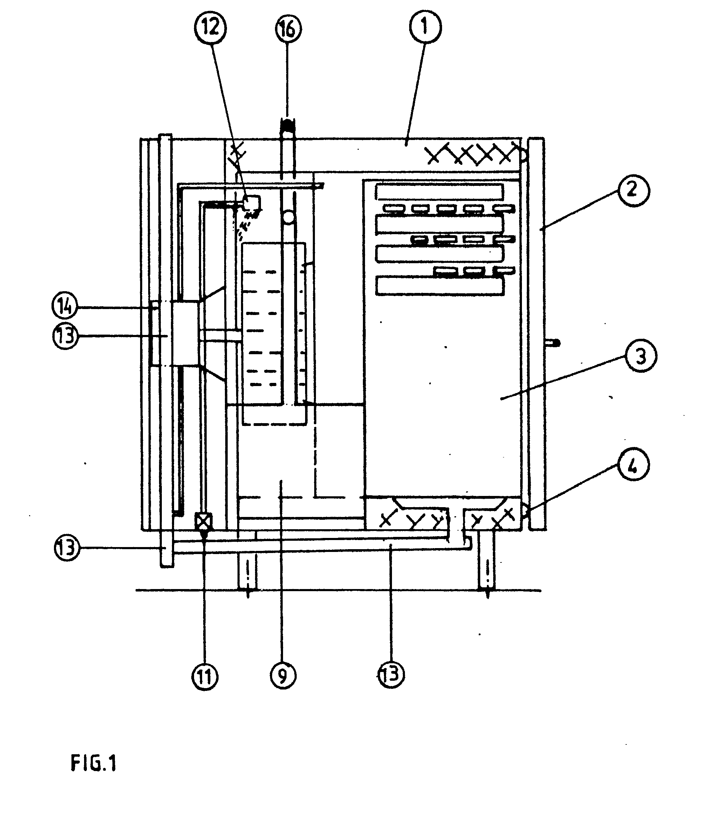

Fig. 1 einen senkrechten Schnitt durch ein Gargerät

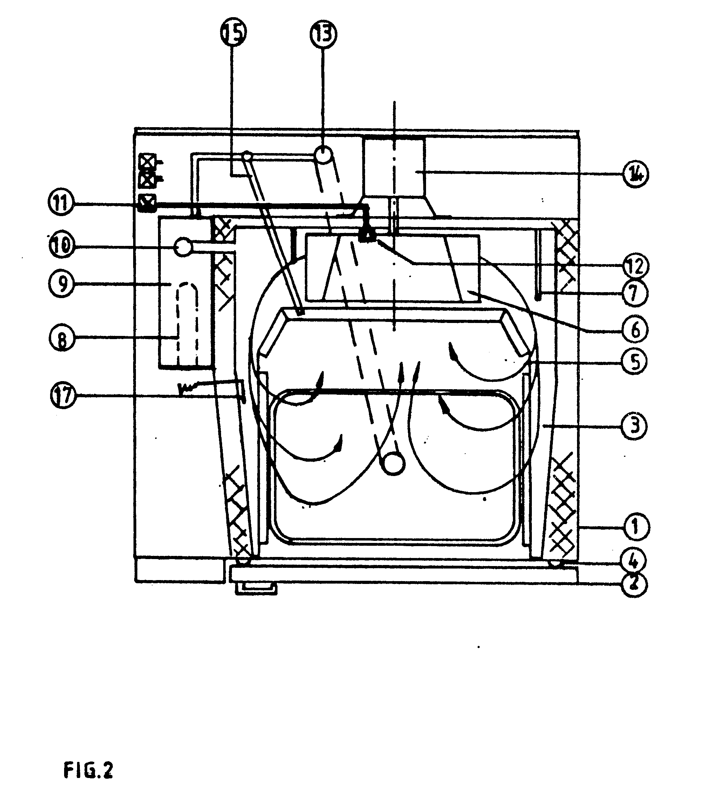

Fig. 2 einen waagrechten Schnitt durch ein Gargerät.

Die wärmeisolierte Garraummuffel 1 ist an der Vorderfront durch die Tür 2 beschickbar. Die im Garraum 3 entstehenden Schwaden werden durch die rundum angeordnete
Türdichtung 4 daran gehindert, aus dem Gerät auszutreten.
Zur gleichmäßigen Verteilung des vom Lüfterrad 6 umgewälzten Heizmediums sorgen Luftleitbleche 5. Die durch
Pfeile angedeudete umgewälzte Heißluft wird nach dem
Verlassen des Lüfterrades 6 an Heizkörpern 7 vorbeigeleitet und gelangt über die seitlichen Luftleitbleche 5
zwischen die einzelnen Etagen des Garraumes 3, von wo sie
zentral vom Lüfterrad 6 wieder angesaugt wird. Bei Dämpfbetrieb wird der Dampferzeuger 9 durch die Heizkörper 8
beheizt und der Wasserdampf vom Dampferzeuger über das
Dampfrohr 10 dem Garraum zugeführt.

Will man zunächst mit Heißluft von etwa 250 $^{o}$C garen und
dann auf Dämpfen durch Einführen von Wasserdampf umstellen,wird zunächst das Wasserventil 11 der Abkühlvorrichtung geöffnet und kaltes Wasser über Düse 12 auf die
Garraumrückwand gesprüht. Der Garraum ist über das Ablauf- und Abluftrohr 13 mit der freien Atmosphäre verbunden, so daß ein Überdruck nicht entstehen kann.

Der Motor 14 treibt das Lüfterrad 6 an während in dem
Fühlerrohr 15 ein Dampfthermostat angeordnet ist, welcher
bei Dämpfbetrieb den Dampferzeuger steuert. Mit 16 ist
ein angedeutetes Sicherheitsventil des Dampferzeugers
bezeichnet. Der Ablauf bei der Umstellung von Heißluftauf Dämpfbetrieb ist folgender:
Während der Einstellung des Gerätes auf Heißluftbetrieb
wird das Lüfterrad 6 vom Motor 14 angetrieben und die
Heizkörper 7 sind immer dann eingeschaltet, wenn die gewünschte Heißlufttemperatur von z.B. 250 $^{\circ}$C nicht erreicht ist. Sobald das Gerät auf Dämpfbetrieb umgeschaltet wird, wird das Wasserventil 11 solange geöffnet,
bis der Thermostatfühler 17 meldet, daß durch das auf
die Rückwand gesprühte kalte Wasser die Temperatur im Garraum auf etwa 100 $^{\circ}$C gesunken ist. Jetzt wird aus dem
Dampferzeuger 9 auf die übliche Weise Wasserdampf in
den Garraum eingeführt.

Alle notwendigen Schaltvorgänge können automatisch erfolgen, wenn die Bedienungsperson das Gerät von Heißluftauf Dämpfbetrieb umschaltet.

BUDERUS AKTIENGESELLSCHAFT
TP/Be/St/PG 1149

Patentansprüche

1. Verfahren zum wahlweisen Betreiben eines Gargerätes mit umgewälzter Heißluft oder Wasserdampf, dadurch gekennzeichnet, daß beim Umschalten von Heißluft auf Wasserdampfbetrieb eine Garraumwand mit kaltem Wasser so lange besprüht wird, bis die Temperatur im Garraum auf etwa 100 $^{\circ}$C gesunken ist.

2. Verfahren nach Anspruch 1, dadurch gekennzeichnet, daß die Rückwand des Garraumes mit Wasser besprüht wird, und das Lüfterrad (6) zur Umwälzung der Heißluft bzw. des Wasserdampfes an dieser Rückwand angeordnet ist.

3. Gargerät zur Durchführung des Verfahrens nach Anspruch 1 oder 2, gekennzeichnet durch eine von einem Thermostatfühler (17) überwachtes Magnetventil (11) in einer mit einer auf die Garraumwand gerichteten Düse (12) versehenen Wasserzuleitung.

4. Gerät zur Durchführung des Verfahrens nach Anspruch 1 oder 2, dadurch gekennzeichnet, daß die aus Thermostatfühler (17) Magnetventil (11) und Düse (12) bestehende Abkühleinrichtung den beim Dämpfbetrieb in Funktion tretenden Geräteeinrichtungen steuerungsmäßig automatisch vorgeschaltet sind.

FIG.1

FIG.2